# FASCICULE DE BREVET EUROPEEN

(11) **EP 2 193 914 B1**
(45) Date de publication et mention de la délivrance du brevet: **08.06.2011**
(21) Numéro de dépôt: 09176652.7
(22) Date de dépôt: 20.11.2009
(51) Int. Cl.: B32B 25/10, B32B 5/24, B60K 15/03, B64D 37/06

(54) **Dispositif de protection contre des tirs pour container renfermant un liquide, et container qui en est pourvu.**
Schutzvorrichtung gegen Einschüsse für Flüssigkeitscontainer und damit ausgestatteter Container
Device for protection from gunfire for container enclosing liquid and containers that may require such device

(30) Priorité: 02.12.2008 FR 0806757
(43) Date de publication de la demande: 09.06.2010
(73) Titulaire: HUTCHINSON, 75008 Paris (FR)
(72) Inventeur: Le Rossignol, Benoit, 45800, St. Jean de Braye (FR); Forster, Eric, 95590, Nerville La Foret (FR)
(74) Mandataire: Bolinches, Michel Jean-Marie

(56) Documents cités:
- GB-A- 2 054 457
- US-A- 4 336 291

## Description

La présente invention concerne un dispositif multicouches de protection contre des tirs de balles destiné à être solidarisé avec une face externe d'une paroi d'un container renfermant un liquide choisi dans le groupe constitué par les carburants utilisables dans les conditions normales de température et de pression, les huiles de lubrification, les huiles hydrauliques et les solvants lourds hydrocarbonés, et un tel container pourvu de ce dispositif. L'invention s'applique à l'auto-obturation de perforations de containers dues à de tels tirs, en particulier dans le cas où ces containers renferment un carburant diesel pour véhicule automobile.

Il est connu de longue date de protéger des réservoirs d'essence en équipant leur paroi de dispositifs multicouches auto-obturants en cas de perforation de cette paroi due à un impact de balle, l'auto-obturation étant en général obtenue par le gonflement d'une ou de plusieurs couches en caoutchouc cellulaire (i.e. alvéolaire, également appelé caoutchouc mousse) que comporte le dispositif au contact de l'essence ayant fui par la perforation. En effet, ce gonflement, par l'augmentation de volume importante et rapide due à la diffusion de l'essence dans le caoutchouc (selon un taux de gonflement typiquement compris entre 300 et 800 % pour du caoutchouc naturel cellulaire), permet un rebouchage presque instantané de la perforation et évite ou minimise ainsi la fuite d'essence du réservoir. Une ou plusieurs couches ou nappes textiles peuvent être intercalées entre ces couches de caoutchouc cellulaire. On peut par exemple citer les documents GB-545 504 et GB-A-2 054 457 pour la description de tels dispositifs de protection.

Il est également connu par le document US-A-4 336 291 d'utiliser des couches de caoutchouc qui obturent de telles perforations uniquement par les déformations élastiques de ces couches qui sont reliées entre elles en des emplacements espacés, sans que ces couches soient nécessairement le siège d'un gonflement au contact du carburant.

Un inconvénient majeur de ces dispositifs connus est qu'ils ne permettent pas une obturation rapide du réservoir dans le cas où celui-ci renferme non pas de l'essence mais un carburant plus lourd, tel que du gazole pour véhicule automobile. En effet, il s'avère que le gazole présente une vitesse de diffusion dans les caoutchoucs cellulaires qui est très inférieure à celle de l'essence, ce qui se traduit par un taux de gonflement du caoutchouc naturel cellulaire dans le gazole typiquement compris entre 100 et 200 % et conduit au rebouchage de la perforation seulement au bout de quelques minutes, ce qui n'est bien entendu pas satisfaisant pour minimiser la fuite de gazole.

Un but de la présente invention est de proposer un dispositif multicouches de protection contre des tirs de balles destiné à être solidarisé avec une face externe d'une paroi d'un container renfermant un liquide choisi dans le groupe constitué par les carburants utilisables dans les conditions normales de température et de pression, les huiles de lubrification, les huiles hydrauliques et les solvants lourds hydrocarbonés, qui permette notamment de remédier à cet inconvénient, ce dispositif comportant plusieurs couches de caoutchouc respectivement interne et plus externe(s) pour la paroi dont la ou l'une au moins des couches plus externe(s) est en caoutchouc cellulaire pour permettre l'auto-obturation d'une perforation de la paroi par son gonflement au contact du liquide, au moins deux de ces couches adjacentes étant reliées entre elles par une structure fibreuse intercalaire.

A cet effet, un dispositif de protection selon l'invention est tel que la ou chaque structure intercalaire comprend au moins une feuille à base de fibres non tissées qui est absorbante vis-à-vis dudit liquide et apte à accélérer la diffusion du liquide absorbé sur toute la surface de la ou de chaque couche en caoutchouc cellulaire en contact avec cette feuille, pour accélérer et accroître son gonflement et obtenir ainsi cette auto-obturation en un temps minimisé.

Par couche de caoutchouc « interne », on entend dans la présente description celle des couches de caoutchouc du dispositif qui est destinée à être la plus proche de la paroi du container, cette couche interne étant de préférence en caoutchouc cellulaire mais pouvant à la limite être réalisée en un caoutchouc compact.

Par couche(s) de caoutchouc « plus externe(s) », on entend ici celle(s) des couches de caoutchouc du dispositif qui se trouve(nt) à l'extérieur de cette couche interne après montage sur la paroi du container, que ce soit la couche la plus extérieure dans le cas où le dispositif ne comporte que deux couches de caoutchouc auquel cas cette unique couche externe est en un caoutchouc cellulaire, ou bien une ou plusieurs couche(s) intermédiaire(s) dans le cas préférentiel où le dispositif comporte au moins trois couches de caoutchouc auquel cas au moins la ou chaque couche intermédiaire et/ou la couche la plus externe du dispositif est/sont en caoutchouc cellulaire.

On notera que cette feuille intercalaire selon l'invention à base de fibres non tissées (i.e. exclusivement ou essentiellement constituée de ces fibres), qui est en contact intime sur toute sa surface avec les deux couches interne et externe, ou entre deux couches intermédiaires ou encore entre une couche intermédiaire et la couche externe, permet en cas de perforation d'absorber très rapidement et dans toute sa masse le liquide précité en générant une mise en contact surfacique rapide et sur une grande superficie du caoutchouc avec ce liquide. Cette feuille à base de fibres non tissées joue ainsi le rôle d'un drain pour amener instantanément et en de grandes quantités le liquide absorbé au contact du caoutchouc cellulaire adjacent, ce qui entraîne un gonflement très rapide et important de ce caoutchouc cellulaire qui permet de reboucher la perforation en quelques instants.

En particulier, la ou chaque structure intercalaire non tissée de l'invention permet, de manière surprenante, d'améliorer très nettement la cinétique de gonflement du caoutchouc cellulaire au contact d'un carburant diesel absorbé par cette structure, tel que du gazole, en comparaison notamment de la cinétique de gonflement au contact du même carburant de ce caoutchouc cellulaire dépourvu de cette structure non tissée. L'amélioration de la cinétique de gonflement obtenue est également valable pour d'autres carburants tels que le kérosène et l'essence et pour des hydrocarbures lourds tels que les huiles de lubrification et les huiles hydrauliques.

Selon une autre caractéristique de l'invention, la ou chaque structure intercalaire peut être apte à absorber par capillarité une masse dudit liquide, par immersion dans ce dernier, qui est supérieure à au moins 200 % de la masse de cette structure (soit deux fois sa masse) avant son immersion.

Il convient de noter que cette capillarité de la ou chaque structure non tissée selon l'invention contribue d'une manière significative à augmenter et à accélérer son absorption volumique du liquide et à sa diffusion sur les surfaces des deux couches de caoutchouc en regard.

Avantageusement, la ou chaque structure intercalaire peut présenter une masse surfacique comprise entre 50 g/m² et 200 g/m². Il convient également de noter que ce grammage réduit de la ou chaque structure non tissée, combiné à sa capillarité, permet d'améliorer encore l'absorption volumique et la diffusion surfacique du liquide au contact de ces couches de caoutchouc.

De préférence, la ou chaque structure intercalaire présente une épaisseur comprise entre 0,5 mm et 5 mm et la ou chaque feuille la constituant est formée d'un nontissé ou d'un papier absorbant, par exemple de type buvard.

Par « nontissé », on entend de manière connue dans la présente description une feuille obtenue en assemblant entre elles des fibres par des procédés chimiques ou physiques autres que le tissage et, de manière générale, toute structure stratifiée ou non à base de matériaux non métalliques comportant au moins un nontissé, lequel peut être défini comme suit d'après la norme ISO 9092 de 1988. Il peut s'agir d'une feuille manufacturée, constituée d'un voile, d'un mat ou d'une nappe de fibres orientées directionnellement ou au hasard, liées par friction et/ou cohésion et/ou adhésion. Ce nontissé peut être à base de fibres naturelles ou chimiques pouvant être des fibres discontinues ou des filaments continus.

Le ou chaque nontissé selon l'invention peut comporter:
- des fibres naturelles, e.g. de la cellulose, et/ou
- des fibres artificielles organiques ou minérales (i.e. fabriquées à partir de produits existant dans la nature ayant été soumis à des transformations chimiques pour obtenir une matière textile ou non), telles que de la viscose ou des fibres de verre, et/ou
- des fibres synthétiques (i.e. fabriquées totalement par voie chimique à partir de dérivés du charbon ou du pétrole) à base d'au moins un polymère, tel qu'un polymère thermoplastique de type textile ou non, e.g. un polyamide par exemple de type PA6 ou PA6.6, un polyester par exemple de type PET ou une polyoléfine, telle qu'un polyéthylène ou un polypropylène.

A titre encore plus préférentiel, la ou chaque structure intercalaire selon l'invention est constituée d'une unique feuille formée d'un nontissé de masse surfacique de préférence comprise entre 150 g/m² et 200 g/m². Cette feuille peut être alors apte à absorber par capillarité une masse dudit liquide, par immersion dans ce dernier, au moins supérieure à 500 % de la masse de cette structure (soit cinq fois sa masse) avant cette immersion, notamment dans le cas d'un carburant diesel de type gazole.

Avantageusement, le nontissé formant cette feuille peut être à base de polypropylène, répondant de préférence à la dénomination « OIL PAD 200» pour l'absorption par capillarité d'une masse de carburant diesel pouvant être supérieure à 1000 % de la masse de ce nontissé (soit dix fois sa masse) avant son immersion dans ce carburant.

Selon une autre caractéristique de l'invention, chacune desdites couches de caoutchouc cellulaire peut être constituée d'une composition de caoutchouc réticulée et expansée à cellules ouvertes, qui présente de préférence une densité comprise entre 0,2 et 0,4.

On notera que les cellules ouvertes formées dans ces couches permettent d'accélérer encore leur gonflement au contact du liquide diffusé par la structure non tissée adjacente, en comparaison de mêmes caoutchoucs mais à cellules fermées.

Quant à chacune des couches du dispositif (s'agissant tant de la ou chaque couche de caoutchouc cellulaire que de la ou chaque couche optionnelle de caoutchouc compact), elle est à base d'au moins un élastomère qui est de préférence choisi dans le groupe constitué par le caoutchouc naturel (NR), un polyisoprène (IR), un polychloroprène (CR), un copolymère styrène-butadiène (SBR), un polybutadiène (BR), un copolymère isoprène-isobutylène (caoutchouc butyl IIR), un terpolymère éthylène-propylène-diène (EPDM) et un coupage de caoutchouc naturel avec un autre de ces élastomères comme par exemple un coupage NR/SBR ou NR/EPDM. En variante, cet élastomère peut être un caoutchouc silicone, à titre non limitatif.

Quant à l'épaisseur de chaque couche de caoutchouc, elle est prévue relativement faible, étant par exemple de l'ordre de quelques mm.

Selon un mode préférentiel de réalisation de l'invention, ces couches de caoutchouc sont au moins au nombre de trois et sont reliées entre elles par au moins deux desdites structures intercalaires, au moins une couche intermédiaire et/ou la couche la plus externe formant chacune ladite couche en caoutchouc cellulaire.

Encore plus préférentiellement, toutes les couches de caoutchouc peuvent être de type cellulaire, étant constituées chacune d'une composition de caoutchouc réticulée et expansée à cellules ouvertes à base de caoutchouc naturel, optionnellement mélangé à un autre élastomère tel qu'un SBR ou un EPDM.

On notera que l'utilisation de tels caoutchoucs cellulaires dans toutes les couches de caoutchouc du dispositif de l'invention permet d'optimiser encore le gonflement de ce dernier et donc la rapidité de l'auto-obturation de la perforation, en comparaison d'un dispositif incorporant une ou plusieurs couches en caoutchouc compact (i.e. non cellulaire).

On notera également que l'utilisation de caoutchouc naturel pour constituer toute ou partie de la matrice élastomère de chaque composition de caoutchouc représente un mode préférentiel de réalisation de l'invention, en raison des propriétés mécaniques particulièrement intéressantes du caoutchouc naturel (telles que sa résistance au déchirement et sa résilience) en comparaison de celles des autres caoutchoucs.

Selon une autre caractéristique de l'invention, les couches de caoutchouc du dispositif sont solidarisées entre elles seulement en des points déterminés qui sont espacés au droit de ces couches, de sorte à favoriser leur gonflement en cas de perforation. Cette solidarisation est de préférence réalisée par des moyens mécaniques traversant toutes ces couches en chacun de ces points, tels que des agrafes, rivets ou points de couture, ou bien en variante par des points de colle décalés qui sont appliqués sur chaque face de la ou de chaque structure intercalaire, de sorte à autoriser pour ces couches des déformations variant d'une couche à l'autre.

Avantageusement, ladite couche de caoutchouc la plus externe peut être surmontée, par exemple par collage, d'un ou plusieurs revêtement(s) externe(s) par exemple destinés à accroître la résistance mécanique, la rigidité et/ou l'ignifugation du container.

Un container selon l'invention renferme un liquide choisi dans le groupe constitué par les carburants utilisables dans les conditions normales de température et de pression, les huiles de lubrification, les huiles hydrauliques (e.g. pour un circuit de direction assistée ou de freinage de véhicule automobile) et les solvants lourds hydrocarbonés, s'agissant en particulier d'un réservoir de véhicule terrestre, marin ou aérien, d'une cuve de stockage ou d'une citerne (pouvant être indifféremment statique ou dynamique si montée sur un véhicule), le container étant délimité par une paroi dont une face externe est recouverte d'un dispositif multicouches de protection contre des tirs de balles tel que défini ci-dessus.

A titre de carburants répondant à la définition précitée qui sont utilisables dans le container selon l'invention, on peut par exemple citer de l'essence ou un carburant diesel pour véhicules automobiles, du fuel pour véhicules marins ou terrestres ainsi que du kérosène pour avions ou pour véhicules terrestres.

Selon une autre caractéristique de l'invention, ce container peut être tel que ladite couche interne du dispositif est collée sur cette paroi, laquelle est optionnellement recouverte d'un revêtement intermédiaire.

Avantageusement, ce container peut être notamment un réservoir pour véhicule automobile renfermant du carburant diesel ou de l'essence, ce réservoir pouvant être métallique, plastique ou de structure composite.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en coupe transversale d'un dispositif de protection équipant un container selon un exemple de réalisation de l'invention,
la figure 2 est une vue schématique partielle en coupe transversale d'un dispositif de protection équipant un container selon une variante de réalisation de l'invention,
la figure 3 est une vue schématique partielle en coupe transversale d'un dispositif de protection équipant un container selon une autre variante de réalisation de l'invention, et
la figure 4 est un graphique illustrant l'évolution avec le temps (en minutes) de la variation relative de masse (en %) de trois structures intercalaires selon l'invention de type feuilles de nontissé, en comparaison de celle d'une éprouvette de caoutchouc cellulaire.

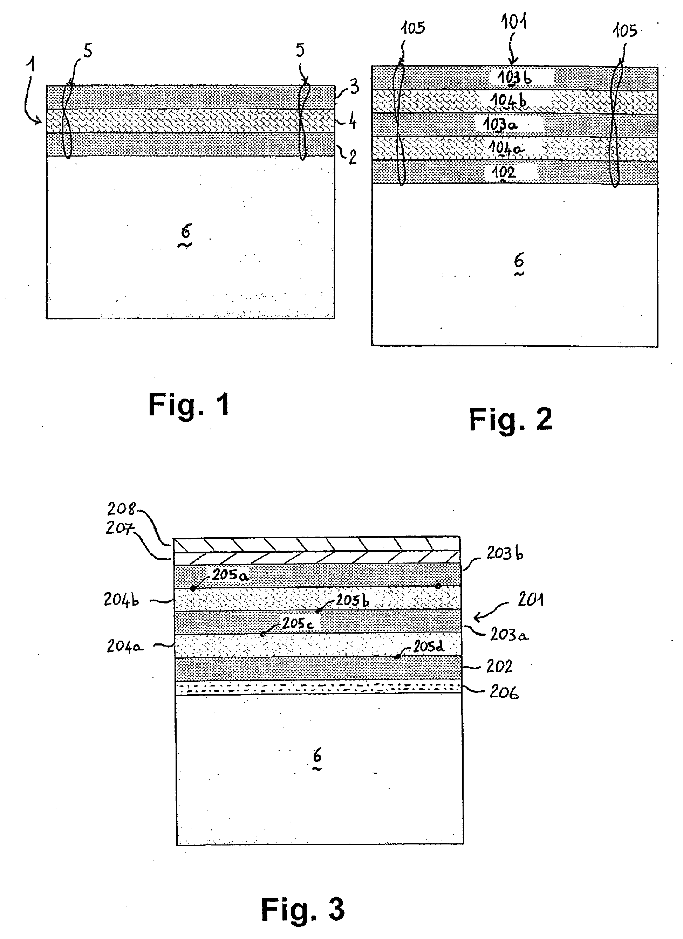

Le dispositif de protection 1 illustré dans l'exemple de la figure 1 comprend deux couches de caoutchouc cellulaire respectivement interne 2 et externe 3 toutes deux à cellules ouvertes, étant chacune de préférence à base de caoutchouc naturel faiblement chargé et de densité proche de 0,3, ces deux couches 2 et 3 étant appliquées de part et d'autre d'une feuille intercalaire 4 à base de fibres non tissées qui est de préférence un nontissé de polypropylène de dénomination commerciale « OIL PAD 200». Ces couches 2 et 3 entourant la feuille 4 sont dans cet exemple solidarisées entre elles par des agrafes, rivets ou points de couture 5 les traversant toutes deux à la fois en des emplacements espacés (de manière régulière ou non) au droit de ces couches 2 et 3. Quant à la couche interne 2, elle est collée directement sur la paroi 6 du container (métallique ou en matière plastique), tel qu'un réservoir de gazole ou d'essence pour véhicule automobile, un réservoir de fuel pour véhicule marin ou terrestre ou un réservoir de kérosène pour avion ou véhicule terrestre, par exemple.

Après obtention séparée de ces couches 2 et 3 réticulées et expansées, on confectionne le dispositif 1 en assemblant ces couches 2 et 3 de part et d'autre de la feuille 4, comme indiqué ci-dessus. On notera que cette feuille 4 de nontissé est ici assemblée aux couches 2 et 3 sans adhérisation ni collage.

Le dispositif de protection 101 illustré à la figure 2 se différencie uniquement de celui de la figure 1, en ce qu'il comprend une troisième couche intermédiaire 103a entre ses couches interne 102 et externe 103b, de part et d'autre de laquelle sont appliquées deux feuilles intercalaires 104a et 104b formées chacune par exemple du même nontissé « OIL PAD 200 ». L'ensemble de ces couches 102, 103a et 103b et de ces feuilles 104a et 104b est solidarisé par des agrafes, rivets ou points de couture 105 à l'instar de la figure 1.

Le dispositif de protection 201 illustré à la figure 3 se différencie de celui de la figure 2, en ce que :
- les trois couches de caoutchouc 202, 203a et 203b et les deux feuilles 204a et 204b intercalées en alternance entre celles-ci sont solidarisées par des points de colle 205a, 205b, 205c et 205d décalés (i.e. non alignés en coupe transversale) qui sont appliqués sur chacune des deux faces de chaque feuille de nontissé 204a, 204b,
- la couche de caoutchouc interne 202 est collée sur un revêtement intermédiaire 206 par exemple en matière plastique dont est pourvue la paroi 6 du container, et en ce que
- la couche de caoutchouc externe 203b est surmontée par collage d'un revêtement de protection mécanique 207 de préférence à base d'un polyéthylène haute ténacité (PEHT) par exemple de dénomination « DYNEEMA », lequel est recouvert d'un revêtement externe 208 de rigidification et d'ignifugation de préférence à base d'un polyuréthanne se rétractant lors de sa réticulation, de sorte à former une enveloppe rigide et ignifugée pour le container.

La Demanderesse a en particulier établi que la ou les feuilles 4, 104a, 104b, 204a et 204b intercalées dans les dispositifs 1, 101, 201 selon les figures 1 à 3 permettent en cas de perforation d'absorber le gazole très rapidement et dans toute leur masse avec une mise en contact surfacique rapide et sur une grande superficie du gazole avec le caoutchouc, ce qui permet d'augmenter et d'accélérer le gonflement de ce dernier en comparaison du même caoutchouc dépourvu de ces feuilles.

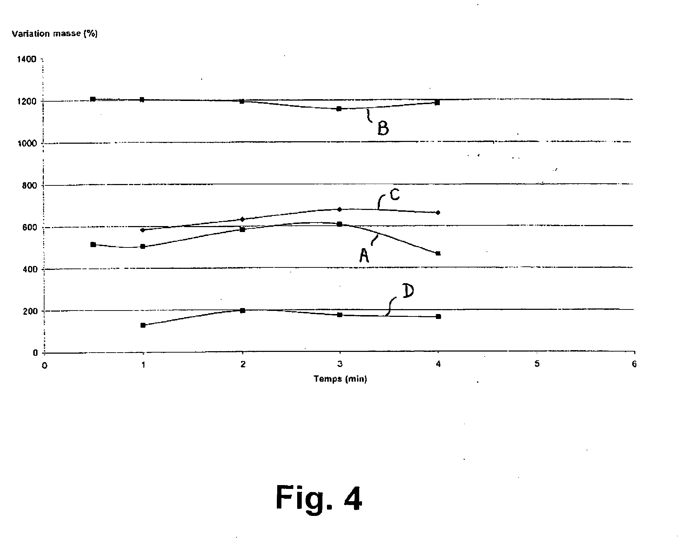

Pour illustrer ce propos, la Demanderesse a réalisé deux séries d'essais consistant :
- pour la première série d'essais, à réaliser des mesures comparatives de la variation relative de masse, suite à une immersion dans de l'essence et dans du gazole, d'une composition de caoutchouc réticulée et non expansée à base de caoutchouc naturel (i.e. un caoutchouc compact) et d'une composition de caoutchouc réticulée de même formulation mais expansée par un agent gonflant de sorte à présenter des cellules ouvertes ; et
- pour la seconde série d'essais (dont les résultats sont illustrés à la figure 4), à réaliser des mesures comparatives de la variation relative de masse, suite à une immersion dans du gazole, de trois feuilles respectivement formées de trois nontissés selon l'invention à base de polypropylène et d'une composition de caoutchouc réticulée à base de caoutchouc naturel et expansée avec des cellules ouvertes.

### Première série d'essais :

On a suivi pour la méthode de détermination de la variation de masse une méthode dérivée de ce qui est décrit dans la norme NFT 46-013. Les conditions d'essai étaient les suivantes:

| | |
|---|---|
| Temps d'immersion : | 5 min. |
| Température des carburants : | 23° C |
| Dimension des éprouvettes : | 20x20x4 mm³ |
| Lecture de la masse : | 1 min. après fin d'immersion |
| Carburants testés : | essence et gazole (standard) |

| | |
|---|---|
| Nombre d'essais par carburant: 3 essais. | |

On a pesé chaque éprouvette sur une balance précise à +/-0,1 mg, et on l'a ensuite plongée dans un récipient rempli de carburant à la température choisie (ici 23° C) et possédant un dispositif permettant de maintenir immergés des éprouvettes de faible densité. On a démarré le chronomètre, puis on a ressorti chaque éprouvette immergée après 5 min. d'immersion. On a ensuite légèrement tamponné chaque éprouvette pour retirer le liquide de sa surface et on l'a placée sur le plateau d'une balance précise à +/- 0,1 mg. On a noté sa masse à la sixième minute, et l'on a calculé sa variation relative de masse ΔM suivant la formule ΔM = (M_{f}-Mᵢ)/Mᵢ x 100, où

Mᵢ et M_{f} sont respectivement les masses initiale et finale de chaque éprouvette.

On a obtenu les valeurs moyennes suivantes pour ΔH :
a) après immersion dans l'essence :
   V = 14,3 % pour les éprouvettes en caoutchouc compact, et
   V = 500 % pour celles en caoutchouc cellulaire ; et
b) après immersion dans le gazole:
   V = 4,6 % pour les éprouvettes en caoutchouc compact, et
   V =120 % pour celles en caoutchouc cellulaire.

Ces valeurs illustrent, d'une part, la supériorité du caoutchouc cellulaire sur le caoutchouc compact pour son gonflement par absorption au contact de l'un ou l'autre des deux carburants et, d'autre part, le pouvoir absorbant moindre vis-à-vis du gazole des caoutchoucs cellulaire et compact par rapport à l'essence.

### Seconde série d'essais :

On a suivi l'évolution avec le temps de la variation relative de masse ΔM, après immersion à 23° C dans du gazole standard (disponible en station service TOTAL) des trois nontissés précités, en comparaison de la variation relative V de masse d'une éprouvette constituée d'une composition de caoutchouc réticulée et expansée de dénomination « NR V194C5» (à base de caoutchouc naturel et à cellules ouvertes). On a utilisé la formule susmentionnée pour le calcul de ΔM, M_{f} étant à présent la masse de l'éprouvette considérée à l'instant t (variant de 0,5 min. à 4 min.).

La courbe A représente l'évolution temporelle de V pour une feuille de nontissé en polypropylène de dénomination «SB40E/O/S», la courbe B pour une feuille de nontissé en polypropylène « OIL PAD 200 », la courbe C pour une autre feuille de nontissé en polypropylène et la courbe D pour l'éprouvette constituée de la composition de caoutchouc « NR V194C5».

Le graphique de la figure 4 montre que le nontissé préférentiel « OIL PAD 200» absorbe environ 1200 % de sa masse (soit douze fois sa masse) très rapidement, soit six fois plus que l'éprouvette en caoutchouc cellulaire. Comme expliqué précédemment, cette absorption rapide du gazole par ce nontissé permet sa diffusion très rapide sur une grande superficie des caoutchoucs en contact avec le nontissé, superficie très supérieure à celle de la surface latérale d'une perforation due à l'impact d'une balle, ce qui permet à chaque caoutchouc adjacent de gonfler et donc de générer l'effet d'auto-obturation souhaité.

## Revendications

1. Dispositif multicouches de protection (1, 101, 201) contre des tirs de balles destiné à être solidarisé avec une face externe d'une paroi (6) d'un container renfermant un liquide choisi dans le groupe constitué par les carburants utilisables dans les conditions normales de température et de pression, les huiles de lubrification, les huiles hydrauliques et les solvants lourds hydrocarbonés, le dispositif comportant plusieurs couches de caoutchouc respectivement interne (2, 102, 202) et plus externe(s) (3 ou 103a, 103b ou 203a, 203b) pour la paroi dont la ou l'une au moins des couches plus externe(s) est en caoutchouc cellulaire pour permettre l'auto-obturation d'une perforation de la paroi par son gonflement au contact du liquide, au moins deux de ces couches adjacentes étant reliées entre elles par une structure fibreuse intercalaire (4, 104a, 104b, 204a, 204b), **caractérisé en ce que** la ou chaque structure intercalaire comprend au moins une feuille à base de fibres non tissées qui est absorbante vis-à-vis dudit liquide et apte à accélérer la diffusion du liquide absorbé sur toute la surface de la ou de chaque couche en caoutchouc cellulaire en contact avec cette feuille, pour accélérer et accroître son gonflement et obtenir ainsi cette auto-obturation en un temps minimisé.

2. Dispositif de protection (1, 101, 201) selon la revendication 1, **caractérisé en ce que** ladite ou chaque structure intercalaire (4, 104a, 104b, 204a, 204b) est apte à absorber par capillarité une masse dudit liquide, par immersion dans ce dernier, qui est supérieure à 200 % de la masse de cette structure avant cette immersion.

3. Dispositif de protection (1, 101, 201) selon la revendication 1 ou 2, **caractérisé en ce que** ladite ou chaque structure intercalaire (4, 104a, 104b, 204a, 204b) présente une masse surfacique comprise entre 50 g/m² et 200 g/m².

4. Dispositif de protection (1, 101, 201) selon une des revendications précédentes, **caractérisé en ce que** ladite ou chaque structure intercalaire (4, 104a, 104b, 204a, 204b) présente une épaisseur comprise entre 0,5 mm et 5 mm, ladite ou chaque feuille la constituant étant formée d'un nontissé ou d'un papier absorbant par exemple de type buvard.

5. Dispositif de protection (1, 101, 201) selon la revendication 4, **caractérisé en ce que** ladite ou chaque structure intercalaire (4, 104a, 104b, 204a, 204b) est constituée d'une unique feuille formée d'un nontissé de masse surfacique de préférence comprise entre 150 g/m²et 200 g/m².

6. Dispositif de protection (1, 101, 201) selon la revendication 5, **caractérisé en ce que** ladite feuille formant ladite ou chaque structure intercalaire (4, 104a, 104b, 204a, 204b) est apte à absorber par capillarité une masse dudit liquide, par immersion dans ce dernier, qui est supérieure à 500 % de la masse de cette structure avant cette immersion.

7. Dispositif de protection (1, 101, 201) selon la revendication 6, **caractérisé en ce que** ledit nontissé est à base de polypropylène, répondant de préférence à la dénomination « OIL PAD 200 » pour l'absorption par capillarité d'une masse de carburant diesel supérieure à 1000 % de la masse de ce nontissé avant son immersion dans ce carburant.

8. Dispositif de protection (1, 101, 201) selon une des revendications précédentes, **caractérisé en ce que** chacune desdites couches de caoutchouc cellulaire (2, 3, 102, 103a, 103b, 202, 203a, 203b) est constituée d'une composition de caoutchouc réticulée et expansée à cellules ouvertes, qui présente de préférence une densité comprise entre 0,2 et 0,4.

9. Dispositif de protection (1, 101, 201) selon une des revendications précédentes, **caractérisé en ce que** chacune desdites couches de caoutchouc (2, 3, 102, 103a, 103b, 202, 203a, 203b) est à base d'au moins un élastomère qui est :
- choisi dans le groupe constitué par le caoutchouc naturel (NR), un polyisoprène (IR), un polychloroprène (CR), un copolymère styrène-butadiène (SBR), un polybutadiène (BR), un copolymère isoprène-isobutylène (IIR), un terpolymère éthylène-propylène-diène (EPDM) et un coupage de caoutchouc naturel avec un autre de ces élastomères, ou bien
- un caoutchouc silicone.

10. Dispositif de protection (101, 201) selon une des revendications précédentes, **caractérisé en ce que** lesdites couches de caoutchouc (102, 103a, 103b ou 202, 203a, 203b) sont au moins au nombre de trois et sont reliées entre elles par au moins deux desdites structures intercalaires (104a, 104b ou 204a, 204b), au moins une couche intermédiaire (103a, 203a) et/ou la couche la plus externe (103b, 203b) formant chacune ladite couche en caoutchouc cellulaire.

11. Dispositif de protection (1, 101, 201) selon une des revendications précédentes, **caractérisé en ce que** chacune desdites couches de caoutchouc (2, 3, 102, 103a, 103b, 202, 203a, 203b) est cellulaire, étant constituée d'une composition de caoutchouc réticulée et expansée à cellules ouvertes à base de caoutchouc naturel, optionnellement mélangé à un autre élastomère tel qu'un SBR ou un EPDM.

12. Dispositif de protection (1, 101, 201) selon une des revendications précédentes, **caractérisé en ce que** lesdites couches de caoutchouc (2, 3, 102, 103a, 103b, 202, 203a, 203b) sont solidarisées entre elles seulement en des points déterminés qui sont espacés au droit de ces couches, de sorte à favoriser leur gonflement en cas de perforation.

13. Dispositif de protection (1,101) selon la revendication 12, **caractérisé en ce que** lesdites couches de caoutchouc (2, 3, 102, 103a, 103b) sont solidarisées entre elles par des moyens mécaniques (5, 105) les traversant toutes en chacun desdits points déterminés, tels que des agrafes, rivets ou points de couture.

14. Dispositif de protection (201) selon la revendication 12, **caractérisé en ce que** lesdites couches de caoutchouc (202, 203a, 203b) sont solidarisées par des points de colle décalés (205a, 205b, 205c, 205d) qui sont appliqués sur chacune des deux faces de la ou de chaque structure intercalaire (204a, 204b), de sorte à autoriser pour ces couches des déformations variant d'une couche à l'autre.

15. Dispositif de protection (201) selon une des revendications précédentes, **caractérisé en ce que** ladite couche de caoutchouc la plus externe (203b) est surmontée, par exemple par collage, d'un ou plusieurs revêtement(s) externe(s) (207, 208) par exemple destinés à accroître la résistance mécanique, la rigidité et/ou l'ignifugation du container.

16. Container renfermant un liquide choisi dans le groupe constitué par les carburants utilisables dans les conditions normales de température et de pression, les huiles de lubrification, les huiles hydrauliques et les solvants lourds hydrocarbonés, en particulier un réservoir de véhicule terrestre, marin ou aérien, une cuve de stockage ou une citerne, le container étant délimité par une paroi (6) dont une face externe est recouverte d'un dispositif multicouches de protection (1, 101, 201) contre des tirs de balles, **caractérisé en ce que** ce dispositif est tel que défini à l'une des revendications précédentes.

17. Container selon la revendication 16, **caractérisé en ce que** ladite couche interne (2, 102, 202) du dispositif de protection (1, 101, 201) est collée sur ladite paroi (6), laquelle est optionnellement recouverte d'un revêtement intermédiaire (206).

18. Container selon la revendication 16 ou 17, **caractérisé en ce qu'**il s'agit d'un réservoir pour véhicule automobile renfermant du carburant diesel ou de l'essence, ce réservoir pouvant être métallique, plastique ou de structure composite.

## Claims

1. Protective multilayer bulletproof device (1, 101, 201) for attachment to an outer face of a wall (6) of a container containing a liquid selected from the group consisting of motor fuels usable in normal temperature and pressure conditions, lubricating oils, hydraulic oils and heavy hydrocarbon solvents, the device comprising several layers of rubber, respectively an internal one (2, 102, 202) and more external one(s) (3 or 103a, 103b or 203a, 203b) for the wall whereof the outermost layer or at least one of the more external layers is made from cellular rubber for self-sealing a perforation of the wall by its swelling in contact with the liquid, at least two of these adjacent layers being joined together by a fibrous interleaved structure (4, 104a, 104b, 204a, 204b), **characterized in that** the or each interleaved structure comprises at least one sheet based on nonwoven fibers which is absorbent to the said liquid and able to accelerate the diffusion of the absorbed liquid on the whole surface of the or each layer of cellular rubber in contact with the said sheet, for accelerating and increasing its swelling and for thereby obtaining the self-sealing in minimal time.

2. Protective device (1, 101, 201) according to Claim 1, **characterized in that** the said or each interleaved structure (4, 104a, 104b, 204a, 204b) is able to absorb a mass of the said liquid by capillarity, by immersion therein, which is higher than 200% of the mass of the said structure before the said immersion.

3. Protective device (1, 101, 201) according to either of Claims 1 and 2, **characterized in that** the said or each interleaved structure (4, 104a, 104b, 204a, 204b) has a mass per unit area of between 50 g/m² and 200 g/m².

4. Protective device (1, 101, 201) according to one of the preceding claims, **characterized in that** the said or each interleaved structure (4, 104a, 104b, 204a, 204b) has a thickness of between 0.5 mm and 5 mm, the said or each sheet constituting same being formed of a nonwoven or of an absorbent paper for example of the blotter type.

5. Protective device (1, 101, 201) according to Claim 4, **characterized in that** the said or each interleaved structure (4, 104a, 104b, 204a, 204b) consists of a single sheet formed of nonwoven having a mass per unit area of preferably between 150 g/m² and 200 *g*/*m².*

6. Protective device (1, 101, 201) according to Claim 5, **characterized in that** said sheet forming the said or each interleaved structure (4, 104a, 104b, 204a, 204b) is able to absorb a mass of the said liquid by capillarity, by immersion therein, which is higher than 500% of the mass of the said structure before the said immersion.

7. Protective device (1, 101, 201) according to Claim 6, **characterized in that** the said nonwoven is based on polypropylene, preferably answering to the trade name "OIL PAD 200" for absorbing by capillarity a mass of diesel fuel higher than 1000% of the mass of the said nonwoven before its immersion in the said fuel.

8. Protective device (1, 101, 201) according to one of the preceding claims, **characterized in that** each of the said layers of cellular rubber (2, 3, 102, 103a, 103b, 202, 203a, 203b) consists of a composition of cross-linked and expanded rubber with open cells, preferably having a specific gravity of between 0.2 and 0.4.

9. Protective device (1, 101, 201) according to one of the preceding claims, **characterized in that** each of the said layers of rubber (2, 3, 102, 103a, 103b, 202, 203a, 203b) is based on at least one elastomer which is:
- selected from the group consisting of natural rubber (NR), a polyisoprene (IR), a polychloroprene (CR), a styrene-butadiene copolymer (SBR), a polybutadiene (BR), an isoprene-isobutylene copolymer (IIR), an ethylene-propylene-diene terpolymer (EPDM) and a blend of natural rubber with another of these elastomers, or:
- a silicone rubber.

10. Protective device (101, 201) according to one of the preceding claims, **characterized in that** the said layers of rubber (102, 103a, 103b or 202, 203a, 203b) are at least three in number and are connected together by at least two of the said interleaved structures (104a, 104b or 204a, 204b), at least one intermediate layer (103a, 203a) and/or the outermost layer (103b, 203b) each forming the said layer of cellular rubber.

11. Protective device (1, 101, 201) according to one of the preceding claims, **characterized in that** each of the said layers of rubber (2, 3, 102, 103a, 103b, 202, 203a, 203b) is cellular, consisting of a composition of cross-linked and expanded rubber with open cells based on natural rubber, optionally mixed with another elastomer such as a SBR or an EPDM.

12. Protective device (1, 101, 201) according to one of the preceding claims, **characterized in that** the said layers of rubber (2, 3, 102, 103a, 103b, 202, 203a, 203b) are attached together only at predefined points which are spaced at these layers, in order to promote their swelling in case of perforation.

13. Protective device (1, 101) according to Claim 12, **characterized in that** the said layers of rubber (2, 3, 102, 103a, 103b) are attached together by mechanical means (5, 105) passing through them at each of the said predefined points, such as staples, rivets or stitches.

14. Protective device (201) according to Claim 12, **characterized in that** the said layers of rubber (202, 203a, 203b) are attached together by offset adhesive dots (205a, 205b, 205c, 205d) which are applied on each of the two faces of the or each interleaved structure (204a, 204b), so as to allow variable deformations in these layers from one layer to another.

15. Protective device (201) according to one of the preceding claims, **characterized in that** the said outermost rubber layer (203b) is surmounted, for example by bonding, by one or more outer coatings (207, 208) for example for increasing the mechanical strength, the stiffness and/or the fire resistance of the container.

16. Container containing a liquid selected from the group consisting of motor fuels usable in formal temperature and pressure conditions, lubricating oils, hydraulic oils and heavy hydrocarbon solvents, in particular a tank of a land, sea or air vehicle, a storage tank or road tanker, the container being bounded by a wall (6) whereof one outer face is covered with a protective multilayer bullet device (1, 101, 201), **characterized in that** the said device is according to one of the preceding claims.

17. Container according to Claim 16, **characterized in that** the said internal layer (2, 102, 202) of the protective device (1, 101, 201) is bonded to the said wall (6), which is optionally covered with an intermediate coating (206).

18. Container according to either of Claims 16 and 17, **characterized in that** it is a tank for a motor vehicle containing diesel fuel or gasoline, and **in that** the said tank can be made from metal, plastic or of a composite structure.

## Patentansprüche

1. Mehrschichtige Schutzvorrichtung (1, 101, 201) gegen Kugelschüsse, welche dazu bestimmt ist, mit einer Außenseite einer Wand (6) eines Behälters fest verbunden zu werden, welcher eine Flüssigkeit einschließt, die ausgewählt ist aus der Gruppe, welche gebildet ist durch bei normalen Temperatur- und Druckbedingungen verwendbare Treibstoffe, Schmieröle, Hydrauliköle und Lösungsmittel aus schweren Kohlenwasserstoffen, wobei die Vorrichtung mehrere, innere (2, 102, 202) und weiter äußere (3 oder 103a, 103b oder 203a, 203b) Kautschukschichten für die Wand aufweist, von welchen die oder wenigstens eine der weiter äußeren Schichten aus einem zellulären Kautschuk ist, um die Selbstverschließung einer Perforation der Wand durch sein Aufquellen beim Kontakt mit der Flüssigkeit zu ermöglichen, wobei wenigstens zwei benachbarte dieser Schichten durch eine faserige Zwischenstruktur (4, 104a, 104b, 204a, 204b) verbunden sind, **dadurch gekennzeichnet, dass** die oder jede Zwischenstruktur wenigstens ein Blatt auf Basis von nicht gewobenen Fasern umfasst, welche gegenüber der Flüssigkeit absorbierend ist und dazu ausgestaltet ist, die Diffusion der absorbierten Flüssigkeit über die gesamte Oberfläche der oder jeder Schicht aus zellulärem Kautschuk in Kontakt mit diesem Blatt zu beschleunigen, um sein Quellen zu beschleunigen und zu steigern und so die Selbstverschließung in einer verminderten Zeit zu erreichen.

2. Schutzvorrichtung (1, 101, 201) nach Anspruch 1, **dadurch gekennzeichnet, dass** die oder jede Zwischenstruktur (4, 104a, 104b, 204a, 204b) dazu ausgestaltet ist, durch Kapillarwirkung eine Masse der Flüssigkeit zu absorbieren, durch Eintauchen in der letzteren, welche größer als 200% der Masse dieser Struktur vor diesem Eintauchen ist.

3. Schutzvorrichtung (1, 101, 201) nach Anspruch 1 oder 2, **dadurch gekennzeichnet, dass** die oder jede Zwischenstruktur (4, 104a, 104b, 204a, 204b) eine flächenbezogene Masse aufweist, welche zwischen 50 g/m² und 200 g/m² enthalten ist.

4. Schutzvorrichtung (1, 101, 201) nach einem der vorhergehenden Ansprüche, **dadurch gekennzeichnet, dass** die oder jede Zwischenstruktur (4, 104a, 104b, 204a, 204b) eine Dicke aufweist, welche zwischen 0,5 mm und 5 mm enthalten ist, wobei das oder jedes sie bildende Blatt aus einem Vlies oder einem absorbierenden Papier, beispielsweise vom Löschpapiertyp, gebildet ist.

5. Schutzvorrichtung (1, 101, 201) nach Anspruch 4, **dadurch gekennzeichnet, dass** die oder jede Zwischenstruktur (4, 104a, 104b, 204a, 204b) aus einem einzigen Blatt gebildet ist, welches gebildet ist aus einem Vlies mit einer flächenbezogenen Masse, die bevorzugt zwischen 150 g/m² und 200 g/m² enthalten ist.

6. Schutzvorrichtung (1, 101, 201) nach Anspruch 5, **dadurch gekennzeichnet, dass** das Blatt, welches die oder jede Zwischenstruktur (4, 104a, 104b, 204a, 204b) bildet, dazu ausgestaltet ist, durch Kapillarwirkung eine Masse der Flüssigkeit zu absorbieren, durch Eintauchen in die letztere, welche größer als 500% der Masse dieser Struktur vor diesem Eintauchen ist.

7. Schutzvorrichtung (1, 101, 201) nach Anspruch 6, **dadurch gekennzeichnet, dass** das Vlies auf Basis von Polypropylen ist, welches vorzugsweise der Bezeichnung "OIL PAD 200" entspricht, für die Absorption durch Kapillarwirkung einer Masse von Dieseltreibstoff, welche größer als 1000% der Masse dieses Vlieses vor seinem Eintauchen in diesen Treibstoff ist.

8. Schutzvorrichtung (1, 101, 201) nach einem der vorhergehenden Ansprüche, **dadurch gekennzeichnet, dass** jede der Schichten aus zellulärem Kautschuk (2, 3, 102, 103a, 103b, 202, 203a, 203b) gebildet ist aus einer netzartigen und geblähten Kautschukzusammensetzung mit offenen Zellen, welche vorzugsweise eine zwischen 0,2 und 0,4 enthaltene Dichte aufweist.

9. Schutzvorrichtung (1, 101, 201) nach einem der vorhergehenden Ansprüche, **dadurch gekennzeichnet, dass** jede der Kautschukschichten (2, 3, 102, 103a, 103b, 202, 203a, 203b) auf Basis wenigstens eines Elastomers ist, welches:
- aus der Gruppe ausgewählt ist, welche gebildet ist durch Naturkautschuk (NR), ein Polyisopren (IR), ein Polychloropren (CR), ein Styrol-Butadien-Copolymer (SBR), ein Polybutadien (BR), ein Isopren-Isobutylen-Copolymer (IIR), ein Ethylen-Propylen-Dien-Terpolymer (EPDM) und einen Verschnitt von Naturkautschuk mit einem anderen dieser Elastomere, oder
- ein Silikonkautschuk ist.

10. Schutzvorrichtung (101, 201) nach einem der vorhergehenden Ansprüche, **dadurch gekennzeichnet, dass** die Kautschukschichten (102, 103a, 103b oder 202, 203a, 203b) wenigstens drei an der Zahl sind und untereinander durch wenigstens zwei der Zwischenstrukturen (104a, 104b oder 204a, 204b) verbunden sind, wobei wenigstens eine Zwischenschicht (103a, 203a) und/oder die äußerste Schicht (103b, 203b) jeweils die Schicht aus zellulärem Kautschuk bildet.

11. Schutzvorrichtung (1, 101, 201) nach einem der vorhergehenden Ansprüche, **dadurch gekennzeichnet, dass** jede der Kautschukschichten (2, 3, 102, 103a, 103b, 202, 203a, 203b) zellulär ist, wobei sie gebildet ist durch eine netzartige und geblähte Kautschukzusammensetzung mit offenen Zellen auf Basis von Naturkautschuk, welcher optional mit einem weiteren Elastomer, wie zum Beispiel einem SBR oder einem EPDM, gemischt ist.

12. Schutzvorrichtung (1, 101, 201) nach einem der vorhergehenden Ansprüche, **dadurch gekennzeichnet, dass** die Kautschukschichten (2, 3, 102, 103a, 103b, 202, 203a, 203b) untereinander lediglich an bestimmten Punkten befestigt sind, welche quer zu den Schichten beabstandet sind, so dass ihr Quellen im Fall einer Perforation begünstigt wird.

13. Schutzvorrichtung (1, 101) nach Anspruch 12, **dadurch gekennzeichnet, dass** die Kautschukschichten (2,3, 102, 103a, 103b) untereinander durch mechanische Mittel (5, 105) befestigt sind, welche alle an jeweils vorbestimmten Punkten durchqueren, wie zum Beispiel Klammern, Niete oder Nahtpunkte.

14. Schutzvorrichtung (201) nach Anspruch 12, **dadurch gekennzeichnet, dass** die Kautschukschichten (202, 203a, 203b) durch versetzte Klebepunkte (205a, 205b, 205c, 205d) befestigt sind, welche auf jeder der zwei Seiten der oder jeder Zwischenstruktur (204a, 204b) aufgebracht sind, so dass für die Schichten Verformungen zugelassen werden, welche von einer Schicht zur anderen variieren.

15. Schutzvorrichtung (201) nach einem der vorhergehenden Ansprüche, **dadurch gekennzeichnet, dass** die äußerste Kautschukschicht (203b), beispielsweise durch Kleben, mit einer oder mehreren äußeren Beschichtung(en) (207, 208) überzogen ist, welche beispielsweise dazu bestimmt sind, die mechanische Widerstandsfähigkeit, die Steifigkeit und/oder die Feuerfestigkeit des Behälters zu steigern.

16. Behälter, welcher eine Flüssigkeit einschließt, die ausgewählt ist aus der Gruppe, die gebildet ist durch bei normalen Temperatur- und Druckbedingungen verwendbare Treibstoffe, Schmieröle, Hydrauliköle und Lösungsmittel aus schweren Kohlenwasserstoffen, insbesondere ein Reservoir eines Land-, Wasser- oder Luftfahrzeugs, ein Vorratsgefäß oder ein Tank, wobei der Behälter durch eine Wand (6) begrenzt ist, von welcher eine Seite mit einer mehrschichtigen Schutzvorrichtung (1, 101, 201) gegen Kugelschüsse bedeckt ist, **dadurch gekennzeichnet, dass** diese Vorrichtung wie in einem der vorhergehenden Ansprüche definiert ist.

17. Behälter nach Anspruch 16, **dadurch gekennzeichnet, dass** die innere Schicht (2, 102, 202) der Schutzvorrichtung (1, 101, 201) auf die Wand (6) geklebt ist, welche optional mit einer Zwischenbeschichtung (206) beschichtet ist.

18. Behälter nach Anspruch 16 oder 17, **dadurch gekennzeichnet, dass** es sich um ein Reservoir für ein Kraftfahrzeug handelt, welches Dieselkraftstoff oder Benzin einschließt, wobei dieses Reservoir metallisch, aus Kunststoff oder aus einer Verbundstruktur sein kann.
